# EUROPÄISCHE PATENTSCHRIFT

(11) **EP 3 587 196 B1**
(45) Veröffentlichungstag und Bekanntmachung des Hinweises auf die Patenterteilung: **30.12.2020**
(21) Anmeldenummer: 19182976.1
(22) Anmeldetag: 27.06.2019
(51) Int. Cl.: B60R 21/203

(54) **GASSACKMODUL FÜR EIN FAHRZEUGINSASSEN-RÜCKHALTESYSTEM SOWIE LENKRADBAUGRUPPE MIT EINEM SOLCHEN GASSACKMODUL**
AIRBAG MODULE FOR A VEHICLE OCCUPANT RESTRAINT SYSTEM AND A STEERING WHEEL ASSEMBLY COMPRISING SUCH AN AIR BAG MODULE
MODULE DE SAC GONFLABLE POUR UN SYSTÈME DE RETENUE D'OCCUPANT DE VÉHICULE AINSI QU'ENSEMBLE DE VOLANT DOTÉ D'UN TEL MODULE DE SAC GONFLABLE

(30) Priorität: 29.06.2018 DE 202018103719 U
(43) Veröffentlichungstag der Anmeldung: 01.01.2020
(73) Patentinhaber: Dalphi Metal España, S.A., 36213 Vigo (ES); Safelife Industria de Componentes de Seguranca Automovel S.A., 4990-645 Gemieira (PT)
(72) Erfinder: Jonietz, Andreas Joachim Maria, 36204 Vigo (ES); Cunha, Vera, 36207 Vigo (ES); Rodríguez Casal, Santiago, 36202 Vigo (ES); Sousa Canastra, Bruno Joaquim, 4900-297 Viana do Castelo (PT)
(74) Vertreter: ZF Patentabteilung - DIPS

(56) Entgegenhaltungen:
- US-A1- 2005 200 104
- US-A1- 2011 248 481
- ANONYMOUS: "Snap-in air bag module", RESEARCH DISCLOSURE, KENNETH MASON PUBLICATIONS, HAMPSHIRE, UK, GB, Bd. 432, Nr. 30, 1. April 2000 (2000-04-01), XP007125885, ISSN: 0374-4353

## Beschreibung

Die Erfindung betrifft ein Gassackmodul für ein Fahrzeuginsassen-Rückhaltesystem mit einem Modulgehäuse, das eine Gehäuseachse und eine Rastzunge zur Ausbildung einer Rastverbindung mit einem Modulträger aufweist, wobei sich die Rastzunge ausgehend vom Modulgehäuse in axialer Richtung zu einem freien Rastzungenende erstreckt, und wobei die Rastzunge zur Ausbildung der Rastverbindung in einer quer zur Gehäuseachse verlaufenden Verformungsrichtung elastisch verformbar ist. Darüber hinaus umfasst die Erfindung auch eine Lenkradbaugruppe mit einem solchen Gassackmodul.

Es ist aus dem Stand der Technik allgemein bekannt und im Fahrzeugbau mittlerweile auch weit verbreitet, Gassackmodule über eine Rastverbindung an einem Modulträger wie etwa einem Lenkrad zu befestigen. So lässt sich zum Beispiel nach einer Montage des Lenkrads im Fahrzeug ein fahrerseitiges Frontgassackmodul mit geringem Montageaufwand einfach aufstecken und zuverlässig am Lenkrad verrasten.

Zum Ausbilden der Rastverbindung können modulseitig elastische Rastzungen vorgesehen sein, welche vom Modulgehäuse abstehen und in Richtung zum Lenkrad ragen, wo sie nach einer elastischen Verformung beispielsweise in starre, am Lenkrad vorgesehene Rasthaken einschnappen.

Die Rastzungen und Rasthaken müssen beim Verrasten technisch einwandfrei zusammenwirken und dürfen insbesondere nicht beschädigt sein, um bei einer Aktivierung des Gassackmoduls ein unerwünschtes Lösen der Rastverbindung zuverlässig zu verhindern und eine Übertragung hoher Modulkräfte zu gewährleisten.

Es hat sich allerdings herausgestellt, dass bei der Verarbeitung oder beim Transport der Gassackmodule die am Modulgehäuse vorstehenden, elastischen Rastzungen in Einzelfällen überdehnt werden können, beispielsweise wenn ein Gassackmodul herunterfällt. Auch im Falle einer unsachgemäßen Demontage des Gassackmoduls vom Modulträger kann es zu einer unbeabsichtigten Überdehnung kommen, beispielsweise wenn die elastischen Rastzungen durch ein Werkzeug zum Lösen der Rastverbindung übermäßig verformt werden.

Durch eine Überdehnung kann sich die Tragfähigkeit und/oder die Spannkraft der elastischen Rastzungen verringern, was sich negativ auf die Belastbarkeit der Rastverbindung auswirkt. Ferner ist eine solche, aus Überdehnung resultierende Beschädigung der Rastzungen für einen Monteur visuell nicht ohne weiteres erkennbar.

Die US 2011/0248481 A1 offenbart ein gattungsgemäßes Gassackmodul mit einem Modulgehäuse aus Kunststoff, wobei an einem Boden des Modulgehäuses einstückig angeformte, elastische Rastelemente vorgesehen sind, die mit jeweils zugeordneten Rastelementen der Lenkradnabe zusammenwirken können. Eine solche Verrastung lässt sich mit geringem Bauraumbedarf realisieren und ermöglicht eine schnelle und einfache Befestigung des Gassackmoduls am Lenkrad.

Aufgabe der Erfindung ist es, ein mit einem Modulträger verrastbares Gassackmodul sowie eine Lenkradbaugruppe mit einem solchen Gassackmodul und einem damit verrastbaren Modulträger zu schaffen, wobei eine vorbestimmte Belastbarkeit der Rastverbindung besonders zuverlässig erreicht werden soll.

Erfindungsgemäß wird diese Aufgabe gelöst durch ein Gassackmodul mit den Merkmalen des Anspruchs 1, wobei sich das Anschlagelement zur Begrenzung einer Rastzungenverformung ausgehend vom Modulgehäuse in axialer Richtung bis zu einem freien Anschlagende erstreckt, und wobei das freie Anschlagende einen Kontaktabschnitt für die Rastzunge aufweist. Dieses benachbart zur Rastzunge angeordnete Anschlagelement verhindert mit geringem Aufwand eine übermäßige Verformung der Rastzunge, sodass die Belastbarkeit der Rastverbindung nicht durch Überdehnung der Rastzunge beeinträchtigt werden kann.

Vorzugsweise ist das Anschlagelement, in Verformungsrichtung gesehen, benachbart zur Rastzunge angeordnet und vom freien Rastzungenende beabstandet.

In einer Ausführungsform des Gassackmoduls weist das Modulgehäuse einen modulträgerseitigen Modulboden auf, der sich im Wesentlichen senkrecht zur Gehäuseachse erstreckt, wobei die Rastzunge am Modulboden angeordnet ist.

Das Modulgehäuse kann ein Kunststoffgehäuse sein, wobei die Rastzunge vorzugsweise einstückig mit dem Modulgehäuse ausgebildet und besonders bevorzugt einstückig an den Modulboden des Modulgehäuses angeformt ist. Ferner kann auch das Anschlagelement einstückig an den Modulboden angeformt sein, sodass sich der Modulboden des Kunststoffgehäuses einschließlich Rastzunge und Anschlagelement mit geringem Aufwand als Spritzgussteil fertigen lässt.

Insbesondere ist eine axiale Abmessung der Rastzunge größer als eine axiale Abmessung des Anschlagelements. Folglich liegt ein Kontaktabschnitt der Rastzunge für das Anschlagelement zwischen dem freien Rastzungenende und dem Modulboden.

Die Erfindung betrifft ferner eine Lenkradbaugruppe für ein Kraftfahrzeug, mit einem oben beschriebenen Gassackmodul sowie einem Lenkrad, das einen Modulträger für das Gassackmodul aufweist und um eine Lenkradachse drehbar ist, wobei der Modulträger ein Rastelement zur Ausbildung einer Rastverbindung mit der Rastzunge des Modulgehäuses aufweist. Die Lenkradachse erstreckt sich dabei vorzugsweise parallel zur Gehäuseachse des Gassackmoduls oder ist in einigen Ausführungsformen sogar mit dieser identisch.

Der Modulträger kann ein Lenkradskelett oder eine fest mit dem Lenkradskelett verbundene Montageplatte des Lenkrads sein.

Das Rastelement des Modulträgers ist bevorzugt ein im Wesentlichen starrer Rasthaken, der insbesondere einstückig am Lenkradskelett oder an der Montageplatte angeformt ist.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine Seitenansicht eines Modulgehäuses eines erfindungsgemäßen Gassackmoduls;
- Figur 2 eine perspektivische Ansicht des Modulgehäuses gemäß Figur 1 im Bereich einer Rastzunge und eines Anschlagelements;
- Figur 3 eine perspektivische Ansicht eines mit dem Modulgehäuse gemäß Figur 1 verrastbaren Modulträgers im Bereich eines Rastelements; und
- Figur 4 eine Schnittansicht einer erfindungsgemäßen Lenkradbaugruppe im Bereich der Rastverbindung zwischen Gassackmodul und Modulträger.

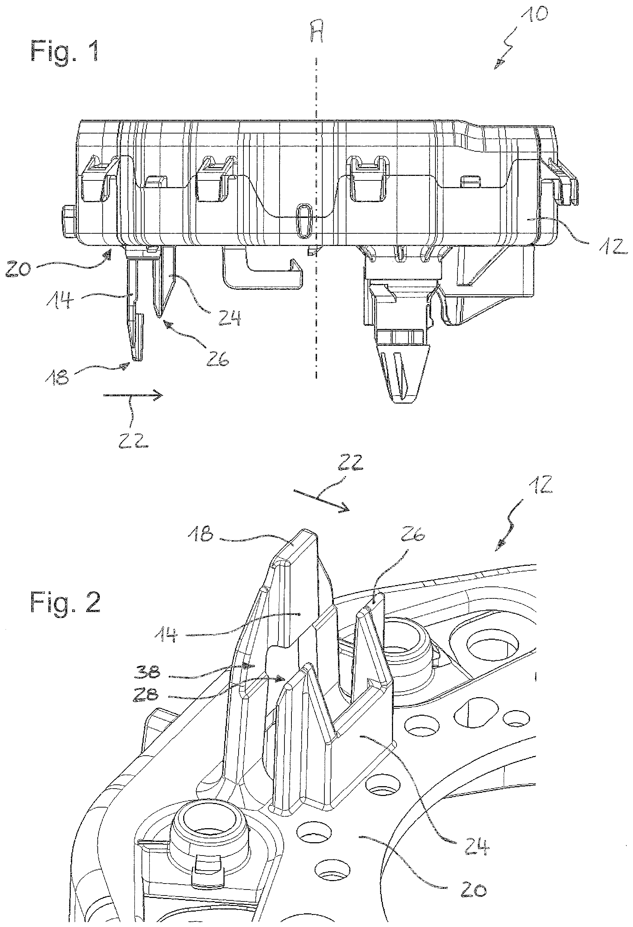

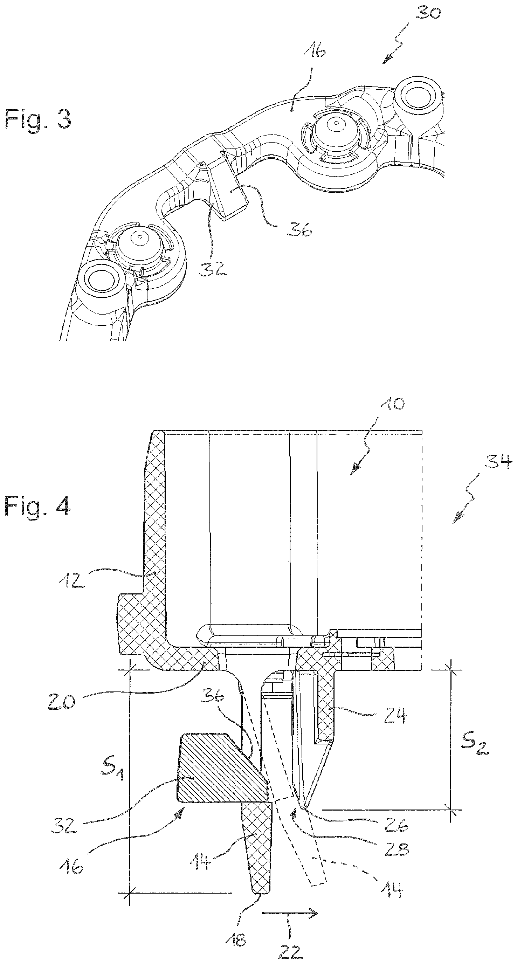

Die Figur 1 zeigt ein Gassackmodul 10 für ein Fahrzeuginsassen-Rückhaltesystem, mit einem Modulgehäuse 12, welches eine Gehäuseachse A und eine Rastzunge 14 zur Ausbildung einer Rastverbindung mit einem Modulträger 16 (siehe Figuren 3 und 4) aufweist, wobei sich die Rastzunge 14 ausgehend vom Modulgehäuse 12 in axialer Richtung zu einem freien Rastzungenende 18 erstreckt.

Das Modulgehäuse 12 ist im vorliegenden Ausführungsbeispiel ein Kunststoffgehäuse und weist einen modulträgerseitigen Modulboden 20 auf, der sich im Wesentlichen senkrecht zur Gehäuseachse A erstreckt, wobei die Rastzunge 14 am Modulboden 20 angeordnet ist.

Ein in Figur 2 dargestellter Detailausschnitt des Gassackmoduls 10 im Bereich der Rastzunge 14 verdeutlicht, dass die Rastzunge 14 hier einstückig mit dem Modulgehäuse 12 ausgeführt und konkret an dessen Modulboden 20 angeformt ist.

Die Rastzunge 14 ist zur Ausbildung der Rastverbindung mit dem Modulträger 16 in einer quer zur Gehäuseachse A verlaufenden Verformungsrichtung 22 elastisch verformbar, wobei das Modulgehäuse 12 ein Anschlagelement 24 zur Begrenzung einer Rastzungenverformung aufweist.

In Verformungsrichtung 22 gesehen ist das Anschlagelement 24 benachbart zur Rastzunge 14 angeordnet und vom freien Rastzungenende 18 beabstandet. Das Anschlagelement 24 ist in Verformungsrichtung 22 im Wesentlichen starr ausgebildet und erstreckt sich ausgehend vom Modulgehäuse 12 in Richtung der Gehäuseachse A zu einem freien Anschlagende 26, wobei das Anschlagende 26 einen Kontaktabschnitt 28 für die Rastzunge 14 bildet.

Gemäß Figur 2 ist das Anschlagelement 24, analog zur Rastzunge 14, einstückig mit dem Modulgehäuse 12 ausgebildet und konkret an dessen Modulboden 20 angeformt.

Die Figur 3 zeigt ausschnittsweise einen Modulträger 16, an dem das oben beschriebene Gassackmodul 10 verrastet werden kann.

Der Modulträger 16 ist im dargestellten Ausführungsbeispiel ein Lenkradskelett eines Lenkrads 30 und weist ein Rastelement 32 zur Ausbildung einer Rastverbindung mit der Rastzunge 14 des Gassackmoduls 10 auf. Das Rastelement 32 ist dabei ein im Wesentlichen starrer Rasthaken und insbesondere einstückig am Modulträger 16 angeformt.

In einer alternativen Ausführungsvariante verrastet das Gassackmodul 10 nicht unmittelbar am Lenkradskelett, sondern an einer fest mit dem Lenkradskelett verbundenen Montageplatte des Lenkrads 30, welche dann den Modulträger 16 bildet.

Das Gassackmodul 10 ist in diesem Fall ein fahrerseitiges Frontgassackmodul, könnte jedoch alternativ auch ein anderes, an beliebiger Stelle im Kraftfahrzeug einsetzbares Gassackmodul sein, welches elastische Rastzungen zur Verrastung mit einem geeigneten Modulträger aufweist.

Das Lenkrad 30 mit dem als Lenkradskelett oder Montageplatte ausgebildeten Modulträger 16 ist um eine Lenkradachse drehbar. Nach einer Verrastung mit dem Modulträger 16 bildet das oben beschriebene Gassackmodul 10 zusammen mit dem Lenkrad 30 eine Lenkradbaugruppe 34 für ein Kraftfahrzeug, wobei die Gehäuseachse A des Gassackmoduls 10 parallel zur Lenkradachse verläuft oder sogar mit dieser identisch ist.

Die Figur 4 zeigt die Lenkradbaugruppe 34 im Bereich der Rastverbindung zwischen Gassackmodul 10 und Modulträger 16, wobei sich die Rastzunge 14 des Gassackmoduls 10 in Rasteingriff mit dem Rastelement 32 des Modulträgers 16 befindet. Beim Herstellen und Lösen der Rastverbindung wird die elastische Rastzunge 14 von einer modulseitigen Schräge 36 des Rastelements 32 bzw. einem Werkzeug beaufschlagt und nimmt dann eine in Verformungsrichtung 22 ausgelenkte Position ein, die in Figur 4 gestrichelt angedeutet ist.

Das Anschlagelement 24 ist dabei geometrisch so angeordnet und geformt, dass es eine für die Montage und Demontage des Gassackmoduls 10 notwendige Verformung der Rastzunge 14 erlaubt, jedoch bei einer darüberhinausgehenden, größeren Verformung einen im Wesentlichen starren Anschlag bildet, an dem sich die Rastzunge 14 abstützt, sodass eine Überdehnung der Rastzunge 14 zuverlässig verhindert wird.

Anhand der Figur 4 wird deutlich, dass eine axiale Abmessung s₁ der Rastzunge 14 größer ist als eine axiale Abmessung s₂ des Anschlagelements 24. Folglich liegt ein Kontaktabschnitt 38 der Rastzunge 14 für das Anschlagelement 24 zwischen dem freien Rastzungenende 18 und dem Modulboden 20. Das Anschlagelement 24 kann auf diese Weise zuverlässig eine Verformung der Rastzunge 14 begrenzen, ohne die Montage des Gassackmoduls 10 am Modulträger 16 zu behindern.

## Patentansprüche

1. Gassackmodul für ein Fahrzeuginsassen-Rückhaltesystem, mit
einem Modulgehäuse (12), das eine Gehäuseachse (A) und eine Rastzunge (14) zur Ausbildung einer Rastverbindung mit einem Modulträger (16) aufweist,
wobei sich die Rastzunge (14) ausgehend vom Modulgehäuse (12) in Richtung der Gehäuseachse (A) zu einem freien Rastzungenende (18) erstreckt,
wobei die Rastzunge (14) zur Ausbildung der Rastverbindung in einer quer zur Gehäuseachse (A) verlaufenden Verformungsrichtung (22) elastisch verformbar ist, und
wobei das Modulgehäuse (12) ein Anschlagelement (24) zur Begrenzung einer Rastzungenverformung aufweist,
**dadurch gekennzeichnet, dass** sich das Anschlagelement (24) ausgehend vom Modulgehäuse (12) in Richtung der Gehäuseachse (A) zu einem freien Anschlagende (26) erstreckt, wobei das freie Anschlagende (26) einen Kontaktabschnitt (28) für die Rastzunge (14) aufweist.

2. Gassackmodul nach Anspruch 1, **dadurch gekennzeichnet, dass** das Anschlagelement (24), in Verformungsrichtung (22) gesehen, benachbart zur Rastzunge (14) angeordnet und vom freien Rastzungenende (18) beabstandet ist.

3. Gassackmodul nach Anspruch 1 oder 2, **dadurch gekennzeichnet, dass** das Modulgehäuse (12) einen modulträgerseitigen Modulboden (20) aufweist, der sich im Wesentlichen senkrecht zur Gehäuseachse (A) erstreckt, wobei die Rastzunge (14) am Modulboden (20) angeordnet ist.

4. Gassackmodul nach wenigstens einem der vorhergehenden Ansprüche, **dadurch gekennzeichnet, dass** das Modulgehäuse (12) ein Kunststoffgehäuse ist, insbesondere wobei die Rastzunge (14) einstückig mit dem Modulgehäuse (12) ausgebildet ist.

5. Gassackmodul nach wenigstens einem der vorhergehenden Ansprüche, **dadurch gekennzeichnet, dass** eine axiale Abmessung (si) der Rastzunge (14) größer ist als eine axiale Abmessung (s₂) des Anschlagelements (24).

6. Lenkradbaugruppe für ein Kraftfahrzeug, mit
einem Gassackmodul (10) nach einem der vorhergehenden Ansprüche sowie
einem Lenkrad (30), das einen Modulträger (16) für das Gassackmodul (10) aufweist,
wobei der Modulträger (16) ein Rastelement (32) zur Ausbildung einer Rastverbindung mit der Rastzunge (14) des Modulgehäuses (12) aufweist.

7. Lenkradbaugruppe nach Anspruch 6, **dadurch gekennzeichnet, dass** der Modulträger (16) ein Lenkradskelett oder eine fest mit dem Lenkradskelett verbundene Montageplatte des Lenkrads (30) ist.

8. Lenkradbaugruppe nach Anspruch 6 oder 7, **dadurch gekennzeichnet, dass** das Rastelement (32) ein im Wesentlichen starrer Rasthaken ist.

## Claims

1. An airbag module for a vehicle occupant restraint system comprising
an airbag module housing (12) which includes a housing axis (A) and a snap-in tongue (14) for forming a snap-in connection with a module carrier (16),
wherein the snap-in tongue (14) extends from the module housing (12) in the direction of the housing axis (A) to a free end of the snap-in tongue (18),
wherein the snap-in tongue (14) is elastically deformable in a deformation direction (22) extending transversely to the housing axis (A) for forming the snap-in connection and
wherein the module housing (12) includes a stop element (24) for limiting deformation of the snap-in tongue,
**characterized in that** the stop element (24) extends from the module housing (12) in the direction of the housing axis (A) to a free stop end (26), the free stop end (26) including a contact portion (28) for the snap-in tongue (14).

2. The airbag module according to claim 1, **characterized in that**, when viewed in the deformation direction (22), the stop element (24) is arranged adjacent to the snap-in tongue (14) and spaced apart from the free end of the snap-in tongue (18).

3. The airbag module according to claim 1 or 2, **characterized in that** the module housing (12) includes a module-carrier side module bottom (20) extending substantially perpendicularly to the housing axis (A), with the snap-in tongue (14) being arranged on the module bottom (20).

4. The airbag module according to at least one of the preceding claims, **characterized in that** the module housing (12) is a plastic housing, especially wherein the snap-in tongue (14) is configured integrally with the module housing (12).

5. The airbag module according to at least one of the preceding claims, **characterized in that** an axial dimension (si) of the snap-in tongue (14) is larger than an axial dimension (s₂) of the stop element (24).

6. A steering wheel assembly for an automotive vehicle comprising
an airbag module (10) according to any one of the preceding claims as well as
a steering wheel (30), which includes a module carrier (16) for the airbag module (10),
wherein the module carrier (16) includes a snap-in element (32) for forming a snap-in connection with the snap-in tongue (14) of the module housing (12).

7. The steering wheel assembly according to claim 6, **characterized in that** the module carrier (16) is a steering wheel skeleton or a mounting plate of the steering wheel (30) which is tightly connected to the steering wheel skeleton.

8. The steering wheel assembly according to claim 6 or 7, **characterized in that** the snap-in element (32) is a substantially rigid snap-in hook.

## Revendications

1. Module airbag pour système de retenue des occupants de véhicule, avec
un boîtier de module (12) qui a un axe de boîtier (A) et une languette de verrouillage (14) pour former une connexion de verrouillage avec un support de module (16),
pour lequel la languette de verrouillage (14) s'étend du boîtier de module (12) dans la direction de l'axe du boîtier (A) jusqu'à une extrémité libre de languette de verrouillage (18),
pour lequel la languette de verrouillage (14) est déformable élastiquement dans une direction de déformation (22) s'étendant transversalement à l'axe du boîtier (A) pour former la connexion de verrouillage, et
pour lequel le boîtier de module (12) a un élément d'arrêt (24) pour limiter la déformation de la languette de verrouillage,
**caractérisé en ce que** l'élément d'arrêt (24) s'étend du boîtier de module (12) dans la direction de l'axe du boîtier (A) jusqu'à une extrémité d'arrêt libre (26), pour lequel l'extrémité d'arrêt libre (26) possède une zone de contact (28) pour la languette de verrouillage (14).

2. Module airbag selon la revendication 1, **caractérisé en ce que** l'élément d'arrêt (24), vu dans le sens de la déformation (22), est disposé au voisinage de la languette de verrouillage (14) et est espacé de l'extrémité libre de la languette de verrouillage (18).

3. Module airbag selon la revendication 1 ou 2, **caractérisé en ce que** le boîtier de module (12) présente une base de module (20) côté support de module, qui s'étend sensiblement perpendiculairement à l'axe du boîtier (A), pour lequel la languette de verrouillage (14) est disposée sur sur la base de module (20).

4. Module airbag selon au moins l'une des revendications précédentes, **caractérisé en ce que** le boîtier de module (12) est un boîtier en plastique, en particulier pour lequel la languette de verrouillage (14) est formée d'une seule pièce avec le boîtier de module (12).

5. Module airbag selon au moins l'une des revendications précédentes, **caractérisé en ce qu'**une dimension axiale (si) de la languette de verrouillage (14) est supérieure à une dimension axiale (s₂) de l'élément d'arrêt (24).

6. Ensemble de volant pour véhicule automobile, avec
un module airbag (10) selon l'une des revendications précédentes et
un volant (30) qui a un support de module (16) pour le module airbag (10),
pour lequel le support de module (16) présente un élément de verrouillage (32) pour former une connexion de verrouillage avec la languette de verrouillage (14) du boîtier de module (12).

7. Ensemble de volant selon la revendication 6, **caractérisé en ce que** le support module (16) est une armature de volant ou une plaque de montage du volant (30) solidaire de l'armature de volant.

8. Ensemble de volant selon la revendication 6 ou 7, **caractérisé en ce que** l'élément de verrouillage (32) est un crochet de verrouillage sensiblement rigide.
